# EUROPÄISCHE PATENTANMELDUNG

(11) **EP 2 369 560 A1**
(43) Veröffentlichungstag der Anmeldung: **28.09.2011**
(21) Anmeldenummer: 10015078.8
(22) Anmeldetag: 29.11.2010
(51) Int. Cl.: G07F 15/00, G07F 17/24, B60L 11/18

(54) **Parkplatzverwaltungssystem**

(30) Priorität: 22.03.2010 DE 102010012366
(71) Anmelder: Telmasol consulting GmbH, 56412 Niederelbert (DE)
(72) Erfinder: Wolfien, Gerhard, 56412 Niederelbert (DE)
(74) Vertreter: Bittner, Bernhard

(57) **Zusammenfassung**

Ein Parkplatzsystem (1) zum Laden von Kraftfahrzeugen (10) mit elektrischer Energie, mit wenigstens einer Ladestation (2), welche elektrisch mit einem Kraftfahrzeug (10) koppelbar ist, um eine Ladungsspeichereinheit dieses Kraftfahrzeugs (10) zu laden, wobei dieser Ladestation (2) wenigstens eine Parkfläche (4) zum vorübergehenden Abstellen des zu ladenden Kraftfahrzeugs zugeordnet ist. Erfindungsgemäß weist das Parkplatzsystem (1) wenigstens eine von der Ladestation (2) getrennte Zentraleinheit (6) auf, welche in Datenkommunikation mit der Ladestation steht, wobei über eine wenigstens zeitweise zwischen der Zentraleinheit (6) und der Ladestation (2) bestehende Kommunikationsverbindung (12) für das Kraftfahrzeug (10) charakteristische Daten übermittelbar sind.

## Beschreibung

Die vorliegende Erfindung bezieht sich auf ein Parkplatzverwaltungssystem. Derartige Parkplatzverwaltungssysteme sind aus dem Stand der Technik seit langem bekannt. Dabei kann beispielsweise über eine kontrollierte Zufahrt etwa mit einer Schranke die Zufahrt auf einen Parkplatz kontrolliert werden, um bei Verlassen des Parkplatzes später ein gewisses Entgelt, welches üblicherweise von der verbrachten Parkzeit abhängt, berechnen zu können. Während dieser Parkzeit stehen die Fahrzeuge üblicherweise auf den ihnen zugewiesenen Parkplätzen. In jüngerer Zeit ist man bemüht, die Umweltverträglichkeit von Fahrzeugen zu erhöhen. Im Rahmen dieser Entwicklung werden auch Elektrofahrzeuge beliebter, welche neben oder anstelle Flüssigkraftstoff betriebener Motoren auch Elektromotoren aufweisen. Ein Problem bei der Verwendung derartiger elektrisch betriebener Fahrzeuge ist bislang, dass deren Aktionsradius noch relativ gering ist, diese also regelmäßig wieder mit elektrischem Strom beladen werden müssen. Das Netz für derartige Ladestationen ist derzeit noch relativ dünn ausgebildet.

Der vorliegenden Erfindung liegt daher die Aufgabe zugrunde, die Mobilität derartiger Elektrofahrzeuge zu erhöhen. Diese Aufgabe wird erfindungsgemäß durch die Gegenstände der unabhängigen Ansprüche erreicht. Vorteilhafte Ausbildungsformen und Weiterbildungen sind Gegenstand der Unteransprüche.

Ein erfindungsgemäßes Parkplatzsystem zum Laden von Kraftfahrzeugen mit elektrischer Energie weist wenigstens eine Ladestation auf, welche elektrisch mit einem Kraftfahrzeug koppelbar ist, um eine Ladungsspeichereinheit dieses Kraftfahrzeugs zu laden. Dabei ist dieser Ladestation wenigstens eine Parkfläche zum vorübergehenden Abstellen des zu ladenden Fahrzeugs zugeordnet. Erfindungsgemäß weist das Parkplatzsystem wenigstens eine bevorzugt von der Ladestation getrennte Zentraleinheit auf, welche in Datenkommunikation mit der Ladestation steht, wobei über eine wenigstens zeitweise zwischen der Zentraleinheit und der Ladestation bestehenden Kommunikationsverbindung für das Kraftfahrzeug charakteristische Daten übermittelbar sind.

Es wird daher erfindungsgemäß vorgeschlagen, ein Parkplatzsystem mit einer Funktion auszustatten, welche es erlaubt, die Batterien elektrisch betriebener Fahrzeuge aufzuladen. Damit wird neben einem Verkauf von Parkzeit auch ein Verkauf von Energie zum Aufladen der Fahrzeuge ermöglicht.

Vorteilhaft weist die Ladestation daher eine Energieabgabeeinheit auf, welche mit dem Fahrzeug verbindbar ist, um dessen Batterien zu laden.

Durch das Konzept, sowohl eine Ladestation als auch eine Zentraleinheit vorzusehen, ist es möglich, in der Zentraleinheit insbesondere die Intelligenz zum Betreiben des Parkplatzsystems vorzusehen, wobei diese Zentraleinheit beispielsweise die Bedienung der Ladestation, das Bezahlwesen und dergleichen steuern kann.

Vorteilhaft weist das Parkplatzsystem eine Kontrolleinrichtung auf, welche eine Zufahrt für Kraftfahrzeuge zu der Parkfläche kontrolliert. Dabei kann es sich beispielsweise um ein Schrankensystem handeln, welches zentral eine Zufahrt für eine Vielzahl von Parkflächen ermöglicht. Daneben wäre es jedoch auch möglich, dass einzelnen Parkflächen jeweils eine derartige Kontrolleinrichtung zugewiesen ist. Anstelle von Schrankeineinrichtungen wäre es auch möglich, dass die Kontrolleinrichtung Fahrzeuge beispielsweise drahtlos mittels RFID erfasst und automatisch entsprechende Parkzeiten berechnet. Dies könnte beispielsweise eine interessante Anwendung für Firmenparkplatzsysteme sein.

Vorteilhaft weist das Parkplatzsystem eine Vielzahl von Ladestationen auf, welche in Kommunikationsverbindung mit der Zentraleinheit stehen. Dabei kann es möglich sein, dass im Zuge von Erweiterungen die Anzahl der Ladestationen verändert wird, wobei jedoch mehr oder weniger derartiger Ladestationen an die gleiche Zentraleinheit angebunden sein können. Mit dieser Lösung wird dem Marktwachstum elektrisch betriebener Fahrzeuge und auch den entsprechenden Folgeinvestitionen Rechnung getragen. Wächst beispielsweise die Anzahl der Nutzer bzw. benötigter Anschlussstellen so sind die Folgekosten relativ gering. Vorteilhaft ist die Ladestation an ein Stromnetz angeschlossen, was die Zuführung von elektrischer Energie an die Fahrzeuge ermöglicht.

Bei einer weiteren vorteilhaften Ausführungsform ist eine Kommunikationsverbindung zwischen der Zentraleinheit und der Ladestation eine drahtlose Kommunikationsverbindung. Auf diese Weise können bei Erweiterung des Systems zusätzliche Ladestationen ohne Arbeiten beispielsweise Erdarbeiten durchgeführt werden. Als drahtlose Verbindung bzw. Datenfernübertragung (DFÜ) können beispielsweise Verfahren wie WiFi oder WLAN vorgesehen sein. Auch wäre es möglich, über eine derartige Verbindung eine Stromversorgung der Zentraleinheit zu erreichen.

Bei einer weiteren vorteilhaften Ausführungsform weist die Ladestation ein elektrisches Anschlussmittel auf, um eine elektrische kabelgestützte Verbindung mit einem Kraftfahrzeug herzustellen. Dabei ist es möglich, dass dieses Anschlussmittel mit entsprechenden genormten elektrischen Anschlussstellen des Fahrzeugs verbunden wird. So wäre beispielsweise ein Anschluss an einer Fahrzeugunterseite möglich. Weiterhin wäre es möglich, dass das Anschlussmittel beim Parken des Fahrzeugs automatisch mit dem Fahrzeug verbunden wird und der Nutzer beispielsweise nur das Fahrzeug an einer vorbestimmten Position abstellen muss. Vorzugsweise wird die Ladestation von der Zentraleinheit, mit der sie insbesondere in Kommunikationsverbindung steht, gesteuert.

Weiterhin kann das System Verriegelungsmechanismen aufweisen, welche beispielsweise an den einzelnen Ladestationen angeordnet sind, und welche eine unbefugte Nutzung der elektrischen Anschlussmittel verhindern.

Bei einer weiteren vorteilhaften Ausführungsform kann die Ladestation selbst auch Kommunikationsmittel aufweisen, über welche an die Ladestation Informationen eingegeben werden könnten. Unter Informationen werden in diesem Zusammenhang Geldmittel, Kreditkarten, Kreditkartennummern und dergleichen verstanden, mit deren Hilfe der Benutzer beispielsweise eine Bezahlung vornehmen kann.

Unter dem für das Kraftfahrzeug charakteristischen Daten werden solche Daten verstanden, welche für das Kraftfahrzeug oder dessen Fahrer charakteristisch sind, wie beispielsweise ein Fahrzeugtyp, ein Ladezustand der Batterien, eine Zeit, während der das Fahrzeug abgestellt ist, eine dem Kraftfahrzeug zugeführte Energiemenge, Kreditkartennummern, Geldmengen und dergleichen.

Vorzugsweise weist jedoch nicht jede einzelne Ladestation Geldaufnahmemittel auf, sondern diese sind an der Zentraleinheit oder an weiteren Einheiten angeordnet. Auf diese Weise ist es möglich, die Ladestation möglichst einfach auszubilden, so dass diese im einfachsten Fall lediglich eine Schalteinrichtung aufweist, mit der eine Stromversorgung an das Kraftfahrzeug geschlossen werden kann.

Es wäre jedoch auch möglich, dass die Ladestation eine Geldannahmeeinrichtung aufweist, um beispielsweise Münzen oder auch Kreditkarten anzunehmen.

Bei einer weiteren vorteilhaften Ausführungsform nimmt die Ladestation die Funktion einer Parkuhr wahr. Speziell in dieser Ausführungsform wird daher das Parken und das Aufladen eines Fahrzeugs kombiniert.

Bei einer weiteren vorteilhaften Ausführungsform weist das Parkplatzsystem eine Leseeinrichtung auf, mit der für Personen charakteristische Daten wie beispielsweise Passnummern, Kreditkartennummern und dergleichen eingelesen werden können.

Bei einer weiteren vorteilhaften Ausführungsform erlaubt die Ladestation unterschiedliche Stromzuführungsarten. So ist beispielsweise sowohl eine 230 V/16 A Normalladung als auch eine 400 V/32 A Schnellladung möglich.

Daneben kann eine Ladestation auch eine Alarmausgabeeinrichtung aufweisen, welche beispielsweise Fehlbedienungen, Zerstörungen und dergleichen anzeigt. Daneben kann die Ladestation auch eine Erkennungseinrichtung für das Kraftfahrzeug aufweisen, wie beispielsweise eine Erkennung mittels RFID-Chips und dergleichen ermöglichen. So ist es möglich, dass der Kunde sowohl die Möglichkeit hat, das Aufladen seines Fahrzeugs durchführen zu lassen oder auch nur einen Parkvorgang durchzuführen.

Bei einer weiteren vorteilhaften Ausführungsform weist eine Ladestation oder auch die Zentraleinheit eine Druckeinrichtung auf, um gedruckte Informationen an den Benutzer auszugeben.

Daneben wäre es auch möglich, eine Kommunikationseinrichtung vorzusehen, welche eine Kommunikation zwischen dem Fahrzeug und der Ladestation oder auch dem Fahrzeug und der Zentraleinheit durchgeführt wird. So wäre es möglich, dass seitens des Parkplatzsystems eine Fahrzeugidentifikation vorgesehen wird, wobei hierbei beispielsweise eine Ladedatenbank zugrunde gelegt werden kann, welche fahrzeug- oder fahrerspezifische Daten wie eine Normal- oder Schnellladung, den maximalen Ladestrom, eine Steckerbelegung usw. enthält. Eine derartige Datenbank kann auch über eine DFÜ gepflegt und aktualisiert werden.

Bei Firmenlösungen oder geschlossenen Nutzerkreisen, wie beispielsweise Wohnbaugesellschaften, kann eine eigene vorhandene Infrastruktur, also ein Rechnersystem, verwendet werden. In diesem Falle können die Ladestationen über DFÜ die Daten übermitteln.

Weiterhin kann eine Informationsausgabeeinrichtung vorgesehen sein, welche den Benutzer für die Ladestation bzw. das Parkplatzsystem spezifische Informationen anzeigt, beispielsweise, wo die nächste freie Ladestelle zu finden ist, wobei dies über Meldungen wie Platz belegt / Platz frei / Platz gestört möglich ist und vorzugsweise auch auf einer world wide web interaktiven Plattform angeboten ist. Daneben wäre es auch möglich, dass derartige Information in ein Navigationssystem eines Fahrzeugs eingebunden werden.

Falls die Vorrichtung eine Münzannahmeeinrichtung aufweist, wäre es hierbei möglich, dass auch Münzen oder Geldeinheiten fremder Währungen angenommen werden.

Bei einer weiteren vorteilhaften Ausführungsform weist das Parkplatzsystem eine Zeitmesseinrichtung auf. Dabei kann sowohl die Ladestation als auch die Zentraleinheit eine derartige Zeitmesseinrichtung aufweisen, welche bestimmt, wie lange ein bestimmtes Kraftfahrzeug auf einen bestimmten Parkplatz gestanden hat oder ggf. für welchen Zeitraum hinweg es geladen wurde.

Weiterhin kann das Parkplatzsystem auch eine Stromverbrauchsmesseinrichtung aufweisen, welche den über eine bestimmte Ladestation an ein Fahrzeug abgegebenen Strom ermittelt. Auf Basis dieses Stroms können entsprechende Kosten dem Fahrzeugnutzer in Rechnung gestellt werden.

Weiterhin wäre es auch möglich, dass die oben erwähnte Alarmanlage sowohl direkt den Alarm ausgibt, als auch über Mittel der Datenfernübertragung. Vorteilhaft weist die Ladestation eine Informationseingabeeinrichtung auf, wobei diese Informationseingabeeinrichtung beispielsweise eine Vielzahl von Knöpfen, numerische Tastaturen zur Eingabe von PINs, eine Sprachunterstützung, eine Anzeigeeinrichtung zur Ausgabe von Informationen an den Benutzer und dergleichen aufweisen kann.

Auch für das Bezahlsystem sind diverse Optionen denkbar, wie beispielsweise Münzwechsler, Kreditkartenannahmeeinheiten, Smartkartenleseeinheiten mit oder Piktogramm, RFID-Einheiten mit oder ohne Piktogramm, Banknotenleser, Fremdwährungsannahmeeinheiten und dergleichen.

Bei einer weiteren vorteilhaften Ausführungsform weisen die Ladestationen vorgegebene elektrische Einheiten, wie beispielsweise FI-Schutzschalter, Kühleinrichtungen, Heizungen und Lüfter auf. Weiterhin weisen die Ladestationen eine Verbrauchsdatenübertragungseinheit auf, um an die Zentraleinheit die besagten Daten auszugeben.

Zur Datenfernübertragung sind unterschiedliche Varianten denkbar, wie beispielsweise GPRS an die Zentraleinheit, UMTS an die Zentraleinheit, SMS, WLAN oder Sprachausgabe an die Zentraleinheit. Daneben können die Informationen an die Ladestationen bzw. Satelliten auch via WiFi oder Funk oder WLAN ausgegeben werden. Daneben ist auch eine Kommunikation an den Endkunden möglich, beispielsweise über das Internet.

Bei einer weiteren vorteilhaften Ausführungsform sind einer Ladestation mehrere Parkflächen zugewiesen. Auch wäre es möglich, dass einzelnen Parkflächen auch keine Ladestationen zugewiesen sind und diese Parkflächen für herkömmliche Fahrzeuge ohne entsprechende Lademöglichkeit gedacht sind.

Die vorliegende Erfindung ist weiterhin auf ein Verfahren zum Betreiben einer Parkplatzanlage bzw. eines Parkplatzsystems und insbesondere eines Parkplatzsystems der oben beschriebenen Art gerichtet, wobei die Parkplatzanlage wenigstens eine Ladestation zum elektrischen Laden von Batterien eines Kraftfahrzeugs aufweist, und wobei dem Kraftfahrzeug die kontrollierte Zufahrt zu einer Parkfläche ermöglicht wird, welche der Ladestation zugewiesen ist und wobei wenigstens zeitweise während eines Parkens des Fahrzeugs auf der Parkfläche die Batterien des Fahrzeugs geladen werden.

Unter einer kontrollierte Zufahrt wird dabei bevorzugt verstanden, dass eine Zufahrt zu der Parkfläche und insbesondere auch eine Verweilzeit des Fahrzeugs auf der Parkfläche erfassbar sind. Dabei können, wie oben erwähnt, Schrankensysteme verwendet werden, aber auch Systeme, welche das betreffende Fahrzeug individuell erfassen. Daneben wird bevorzugt unter einer kontrollierten Zufahrt verstanden, dass die Zufahrt zu den Parkflächen unter bestimmten Bedingungen auch verhindert werden kann.

Weitere Vorteile und Ausführungsformen ergeben sich aus den beigefügten Zeichnungen:
Darin zeigen:
   - Fig. 1: eine grob schematische Darstellung eines erfindungsgemäßen Parkplatz-systems; und
   - Fig. 2: ein Blockdiagramm der einzelnen Komponenten des Parkplatzsystems.

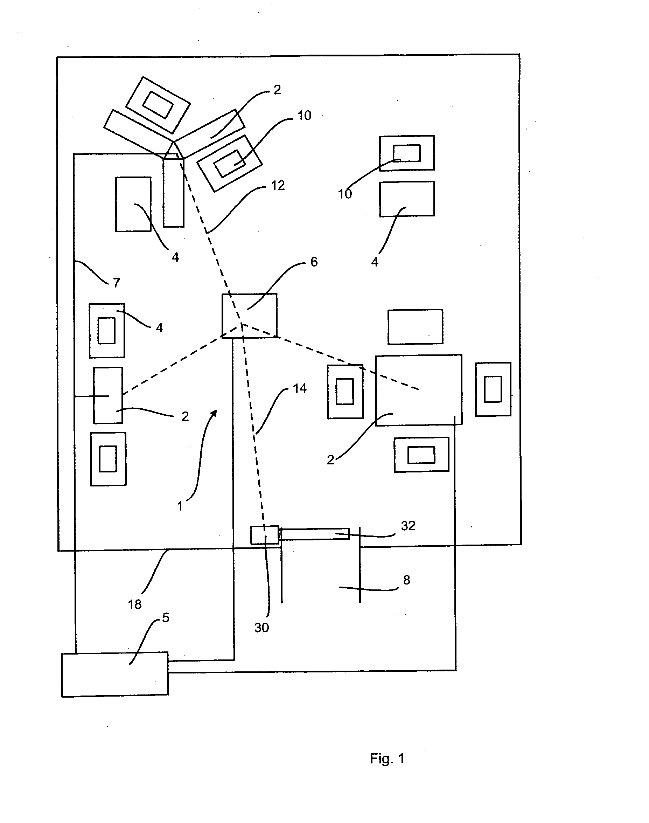

Fig. 1 zeigt eine grob schematische Darstellung eines erfindungsgemäßen Parkplatzsystems 1. Dieses Parkplatzsystem 1 weist hier drei Ladestationen 2 auf, wobei eine Ladestation 2 hier zwei Parkflächen 4 zugeordnet sind, einer weiteren Ladestation 2 drei Parkflächen 4 und einer weiteren Ladestation 2 vier Parkflächen 4. Die Anzahl der Parkflächen, die jeweils einer Ladestation 2 zugewiesen sind, kann jedoch variieren. Auf einigen der besagten Parkflächen 4 befinden sich Kraftfahrzeuge 10. Daneben sind weitere Parkflächen 4 vorgesehen, die jedoch keiner Ladestationen 2 zugewiesen sind, die also beispielsweise für konventionelle Fahrzeuge geeignet sind.

Das Bezugszeichen 5 kennzeichnet eine Energieversorgungseinheit, wie beispielsweise ein öffentliches Stromnetz, über welches die einzelnen Ladestationen 2 über Verbindungsleitungen 7 mit elektrischer Energie versorgt werden. Die einzelnen Ladestationen 2 sind dabei hier stationär angeordnet.

Das Bezugszeichen 6 kennzeichnet eine Zentraleinheit, welche mit den einzelnen Ladestationen kommuniziert. In dieser Zentraleinheit 6 ist die Intelligenz des Parkplatzsystems 1 untergebracht. Das Bezugszeichen 12 kennzeichnet drahtlose Kommunikationsverbindungen, über welche die Zentraleinheit 6 mit den einzelnen Ladestationen 2 kommuniziert. Dabei kann es sich insbesondere um drahtlose Verbindungen, wie WiFi-Verbindungen, Bluetooth-Verbindungen, Internet-Verbindungen und dergleichen handeln.

Das Bezugszeichen 18 bezieht sich auf eine Umrandung, welche die einzelnen Parkflächen 4 von der Umgebung abtrennt. Ein Zugang bzw. eine Ausfahrt der einzelnen Fahrzeuge ist lediglich über einen Zugangs- bzw. Abfahrtsbereich 8 möglich. Bei dieser Umrandung kann es sich beispielsweise um Mauern oder ähnliche Begrenzungselemente handeln, welche die Zufahrt eines Kraftfahrzeugs verhindern. Daneben kann es sich (etwa bei Parkhäusern auch um Gebäudewandungen handeln. Insbesondere dient die Umrandung zu dem Zweck, für Kraftfahrzeuge nur eine definierte Zufahrt bzw. Abfahrt über vorbestimmte Zufahrtswege zu ermöglichen.

Eine Kontrolleinrichtung 30 kontrolliert die Zufahrt von Fahrzeugen 10 auf die einzelnen Parkflächen 4. Dabei ist es bevorzugt möglich, dass jedes Fahrzeug, welches das Parkplatzsystem befährt, registriert wird. Das Bezugszeichen 32 kennzeichnet eine Absperreinrichtung wie beispielsweise eine Schranke, welche Fahrzeuge nur unter einer bestimmten Vorraussetzung, beispielsweise falls die Fahrer ein Parkticket gezogen haben, passieren lässt. Über eine Kommunikationsverbindung 14 steht auch die Kontrolleinrichtung 30 in Kommunikation mit der Zentraleinheit 6. Es wäre auch möglich, dass die Kontrolleinrichtung 30 und die Zentraleinheit 6 in einem gemeinsamen Gehäuse untergebracht sind.

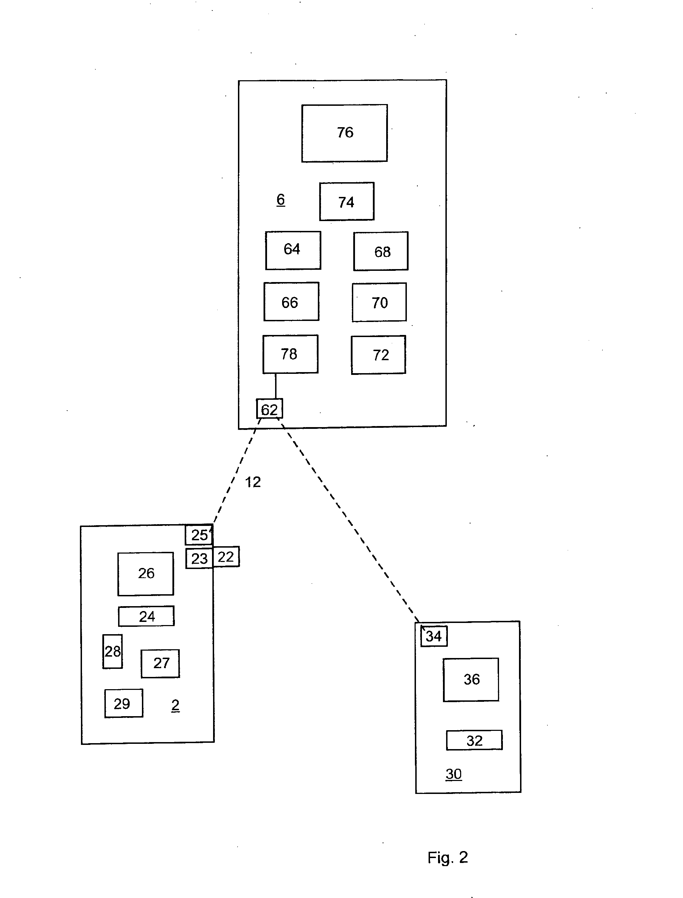

Fig. 2 veranschaulicht das Zusammenspiel einer Ladestation 2, der Zentraleinheit 6 und ggf. der Kontrolleinrichtung 30. Falls ein Fahrzeug eine bestimmte Parkfläche 4 befahren hat, kann sich der Nutzer entscheiden, ob er gleichzeitig auch einen Ladevorgang durchführen will. Zu diesem Zweck kann er beispielsweise eine Anschlusseinrichtung 22 mit seinem Fahrzeug verbinden, so dass das Kraftfahrzeug mit elektrischem Strom gespeist wird. Die Ladestation 2 kann weiterhin eine Anzeigeeinrichtung 26 aufweisen, über die Benutzer bestimmte Daten beispielsweise Parkzeiten, Leistungsabgabe der Ladestation und dergleichen ablesen können.

Über eine Eingabevorrichtung 24 wie beispielsweise eine Tastatur kann der Benutzer Informationen in die Ladestation 2 eingeben, beispielsweise wie lange ein bestimmter Ladevorgang dauern soll, mit welchem elektrischen Parametern (Stromstärke, Spannung) geladen werden soll, über welchen Fahrzeugtyp er verfügt und dergleichen. Das Bezugszeichen 28 kennzeichnet eine Geldannahmeeinrichtung wie beispielsweise Münzschlitze, Geldscheinannahmen, oder auch Leseeinrichtung zum Erkennen von Geldkarten. Das Bezugszeichen 27 kennzeichnet einen Leistungsmesseinrichtung, welche eine an das Kraftfahrzeug abgegebene Energie bestimmt.

Daneben kann auch eine Zeitmesseinrichtung 29 vorgesehen sein, welche eine bestimmte Parkzeit bestimmt. Das Bezugszeichen 25 kennzeichnet eine Sende-/Empfangseinrichtung, welche über eine Kommunikationsverbindung 12 Daten an die Zentraleinheit 6 abgibt. Dabei kann es sich beispielsweise um Daten für eine abgegebene Energiemenge, um fahrzeug-oder nutzerspezifische Daten wie beispielsweise Kreditkarten und dergleichen handeln, es kann sich über eine Information über die Menge eingeworfenen Geldes und dergleichen handeln.

Umgekehrt kann die Zentraleinheit 6 auch die Ladestation 2 steuern, um beispielsweise eine Stromversorgung für ein Kraftfahrzeug freizugeben. Daher weist die Ladestation zusätzlich noch eine Schalteinrichtung 23 auf, mit der ein Schaltvorgang gesteuert werden kann, um ein Kraftfahrzeug mit elektrischer Energie zu versorgen.

Das Bezugszeichen 6 kennzeichnet hier wieder in seiner Gesamtheit die zentrale Einheit. Die zentrale Einheit weist hierbei vorteilhaft eine zentrale Steuereinrichtung 78 zum Steuern der Ladestation 2 auf. Auch die Zentraleinheit 6 weist hier eine Anzeigeeinrichtung, wie ein Display 76 auf, über welches der Benutzer oder auch Personal des Parkplatzsystems, Informationen ablesen kann, wie beispielsweise die Anzahl der belegten Ladestationen und dergleichen. Über eine Eingabeeinrichtung 74 können auch hier in die Zentraleinheit 6 Daten eingegeben werden. Weiterhin ist es auch möglich, dass an eine Zentraleinheit 6 eine steigende Anzahl von Ladestationen angebunden wird, wobei die Zentraleinheit 6 über eine Datensende-/Empfangseinrichtung 62 auch mit diesen weiteren (nicht gezeigten) Ladestationen 2 kommunizieren kann.

Das Bezugszeichen 66 bezieht sich auf eine Speichereinrichtung, in der beispielsweise eine Datenbank abgelegt sein kann, welche eine Vielzahl von Datentypen beinhaltet. Daneben wäre es auch möglich, dass mit dieser Datenbank kundenspezifische Daten abgespeichert sind, wie beispielsweise in einem Firmennetzwerk bzw. auf einem Firmenparkplatz die Fahrzeuge der einzelnen zufahrtsberechtigten Mitarbeiter.

Das Bezugszeichen 68 kennzeichnet auch hier eine ggf. vorhandene Geldeingabeeinheit, über welche Geld in Form von Münzen oder Scheinen aber auch in Form von Kreditkarten eingeführt werden kann. Das Bezugszeichen 70 bezieht sich auf eine Druckausgabeeinrichtung, wie einen Drucker, der beispielsweise für die Nutzer Belege ausdrucken kann. Über die Alarmausgabeeinrichtung 72 können Alarme ausgegeben werden, beispielsweise falls eine Ladestation 2 fehlerhaft bedient wird oder beschädigt wurde. In der Steuereinrichtung 78 können weiterhin auch Informationen darüber abgelegt sein, wie viele Parkflächen gerade belegt sind.

Das Bezugszeichen 30 bezieht sich wieder auf die Kontrolleinrichtung, welche die Zufahrt zu dem Parkplatzsystem kontrolliert. Diese Kontrolleinrichtung kann eine Absperreinrichtung 32 wie etwa eine Schranke aufweisen, welche im Bedarfsfall die Zufahrt schließt bzw. öffnet. Das Bezugszeichen 36 zeigt eine Erkennungseinrichtung, welche beispielsweise über RFID oder andere Methoden ein einfahrendes Fahrzeug erkennt oder beispielsweise auch nur einen bestimmten Fahrzeugtyp ermittelt. Damit wäre es möglich, in Abhängigkeit von dem Fahrzeugtyp den Fahrer anzuweisen, eine bestimmte Ladestation 2 anzufahren, welche für seinen Fahrzeugtyp geeignet ist. Das Bezugszeichen 34 bezieht sich auf eine Sende/ Empfangseinrichtung, mittels derer die Kontrolleinrichtung mit der Zentraleinheit 6 kommuniziert. Weiterhin wäre es auch möglich, dass die Zentraleinheit 6 an weitere Zentraleinheiten Informationen ausgibt oder auch Informationen über das Internet oder an Navigationssysteme abgibt, so dass Fahrzeuge gezielt zu solchen Parkplatzsystemen geleitet werden, in denen sich noch freie Parkplätze befinden.

Es wäre weiterhin auch möglich, dass die Kontrolleinrichtung 30 auch direkt mit den einzelnen Ladestationen 2 kommuniziert. Weiterhin können die Ladestationen 2 Signalmittel wie beispielsweise Beleuchtungsmittel aufweisen, welche Kraftfahrern jeweils einen Besetzungszustand anzeigen. Weiterhin können mit der Anzeigeeinrichtung 26 auch Informationen darüber ausgegeben werden, ob ein bestimmtes Fahrzeug an dem ihm zugeordneten Parkplatz lediglich parkt oder auch zusätzlich mit elektrischer Energie beladen wird.

Die Zentraleinheit 6 weist weiterhin auch eine Prozessoreinrichtung 64 auf, welche für jedes an einer Ladestation 2 mit elektrischer Energie geladene Fahrzeug die jeweilige abgegebenen Energiemenge berechnet und dem Benutzer in Rechnung stellt. Beim Ausfahren aus dem Parkplatzsystem kann wieder die Kontrolleinrichtung 30 überprüfen, ob die korrekte Summe bezahlt wurde und nur im positiven Fall die Ausfahrt aus dem Parkplatzsystem freigeben.

Die Anmelderin behält sich vor sämtliche in den Anmeldungsunterlagen offenbarten Merkmale werden als erfindungswesentlich zu beanspruchen, sofern sie einzeln oder in Kombination gegenüber dem Stand der Technik neu sind.

### Bezugszeichenliste

- 1: Parkplatzsystem
- 2: Ladestation
- 4: Parkflächen
- 5: Energieversorgungseinheit
- 6: Zentraleinheit
- 7: Verbindungsleitung

- 8: Zugangs- und Abfahrtsbereich
- 10: Kraftfahrzeuge
- 14: Kommunikationsverbindung
- 18: Umrandung
- 22: Anschlusseinrichtung
- 23: Schalteinrichtung
- 24: Eingabevorrichtung
- 25: Sende-/Empfangseinrichtung
- 26: Anzeigeeinrichtung
- 27: Leistungsmesseinrichtung
- 28: Geldannahmeeinrichtung
- 29: Zeitmesseinrichtung
- 30: Kontrolleinrichtung
- 32: Absperreinrichtung
- 36: Erkennungseinrichtung
- 62: Sende/ Empfangseinrichtung
- 64: Prozessoreinrichtung
- 66: Speichereinrichtung
- 68: Geldeingabeeinheit
- 70: Druckausgabeeinrichtung
- 74: Eingabeeinrichtung
- 76: Display
- 78: Steuereinrichtung

## Patentansprüche

1. Parkplatzsystem (1) zum Laden von Kraftfahrzeugen (10) mit elektrischer Energie, mit wenigstens einer Ladestation (2), welche elektrisch mit einem Kraftfahrzeug (10) koppelbar ist, um eine Ladungsspeichereinheit dieses Kraftfahrzeugs (10) zu laden, wobei dieser Ladestation (2) wenigstens eine Parkfläche (4) zum vorübergehenden Abstellen des zu ladenden Kraftfahrzeugs zugeordnet ist,
**dadurch gekennzeichnet, dass**
das Parkplatzsystem (1) wenigstens eine von der Ladestation (2) getrennte Zentraleinheit (6) aufweist, welche in Datenkommunikation mit der Ladestation steht, wobei über eine wenigstens zeitweise zwischen der Zentraleinheit (6) und der Ladestation (2) bestehende Kommunikationsverbindung (12) für das Kraftfahrzeug (10) charakteristische Daten übermittelbar sind.

2. Parkplatzsystem (1) nach Anspruch 1,
**dadurch gekennzeichnet, dass**
das Parkplatzsystem (1) eine Kontrolleinrichtung (30) aufweist, welche eine Zufahrt für Kraftfahrzeuge zu der Parkfläche (4) kontrolliert.

3. Parkplatzsystem (1) nach Anspruch 1,
**dadurch gekennzeichnet, dass**
das Parkplatzsystem eine Vielzahl von Ladestationen (2) aufweist, welche in Kommunikationsverbindung mit der Zentraleinheit (6) stehen.

4. Parkplatzsystem (1) nach wenigstens einem der vorangegangenen Ansprüche,
**dadurch gekennzeichnet, dass**
die Kommunikationsverbindung (12) zwischen der Zentraleinheit (6) und der Ladestation eine drahtlose Kommunikationsverbindung (12) ist.

5. Parkplatzsystem (1) nach wenigstens einem der vorangegangenen Ansprüche,
**dadurch gekennzeichnet, dass**
die Ladestation (2) ein elektrisches Anschlussmittel (22) aufweist, um eine elektrische kabelgestützte Verbindung mit einem Kraftfahrzeug (10) herzustellen.

6. Parkplatzsystem (1) nach wenigstens einem der vorangegangenen Ansprüche,
**dadurch gekennzeichnet, dass**
die Ladestation Kommunikationsmittel (24) aufweist, über welche an die Ladestation Informationen eingegebenen werden können.

7. Parkplatzsystem (1) nach wenigstens einem der vorangegangenen Ansprüche,
**dadurch gekennzeichnet, dass**
die Ladestation eine Geldannahmeeinrichtung (28) aufweist.

8. Parkplatzsystem (1) nach wenigstens einem der vorangegangenen Ansprüche,
**dadurch gekennzeichnet, dass**
die Ladestation die Funktion einer Parkuhr wahrnimmt.

9. Parkplatzsystem (1) nach wenigstens einem der vorangegangenen Ansprüche,
**dadurch gekennzeichnet, dass**
das Parkplatzsystem (1) eine Zeitmesseinrichtung aufweist.

10. Verfahren zum Betreiben eines Parkplatzsystems (1), wobei das Parkplatzsystem (1) wenigstens eine Ladestation (2) zum elektrischen Laden von Batterien eines Kraftfahrzeugs (10) aufweist, und wobei dem Kraftfahrzeug (10) die kontrollierte Zufahrt zu einer Parkfläche (4) ermöglicht wird, welche der Ladestation (2) zugewiesen ist, und wobei wenigstens zeitweise während eines Parkens des Fahrzeugs auf der Parkfläche (4) die Batterien des Fahrzeugs geladen werden.
